# EUROPÄISCHE PATENTSCHRIFT

(11) **EP 0 603 733 B1**
(45) Veröffentlichungstag und Bekanntmachung des Hinweises auf die Patenterteilung: **04.09.1996**
(21) Anmeldenummer: 93120236.0
(22) Anmeldetag: 16.12.1993
(51) Int. Cl.: B60N 2/28

(54) **Kraftfahrzeug mit mindestens einem Fahrzeugsitz und ein dazugehöriger Kindersitz**
Automotive vehicle with at least one vehicle seat and an associated children's seat
Véhicule automobile à au moins un siège de véhicule et un siège d'enfant associé

(30) Priorität: 23.12.1992 DE 4243826
(43) Veröffentlichungstag der Anmeldung: 29.06.1994
(73) Patentinhaber: ADAM OPEL AG, 65423 Rüsselsheim (DE)
(72) Erfinder: Gimbel, Hans Peter, Dipl.-Ing., D-65468 Trebur (DE); Trutter, Walter Paul, D-65191 Wiesbaden (DE); Specht, Wolfgang Martin, Dipl.-Ing. FH, D-82340 Feldafing (DE)
(74) Vertreter: Kümpfel, Heinz, Dipl.-Ing.

(56) Entgegenhaltungen:
- EP-A- 0 466 429
- EP-A- 0 485 121
- DE-A- 2 516 185
- US-A- 4 480 870
- US-A- 4 743 064
- US-I- B 520 341
- DATABASE WPI Derwent Publications Ltd., London, GB; AN 93-024901 ANONYMOUS 'rd344057, Airbag'

## Beschreibung

Die Erfindung betrifft einen Kraftfahrzeug mit mindestens einem Fahrzeugsitz, welcher mindestens eine Befestigungsvorrichtung für einen darauf befestigbaren Kindersitz aufweist und mindestens einem Airbag im Bereich dieses Fahrzeugsitzes, wobei der Kindersitz eine formsteife Sitzschale mit einer Polsterung und Gurten zum Festschnallen des Kindes aufweist und die Befestigungsvorrichtung mit einem auf das Befestigen des Kindersitzes reagierenden Sensor zur Entaktivierung des Airbags versehen ist.

Ein derartiges Kraftfahrzeug ist aus der WPI-Derwent Veröffentlichung 93-024901 bekannt, bei dem ein Kindersitz mit dem Rückenlehnenteil in Fahrtrichtung nach vorne ausgerichtet auf einem Kraftfahrzeugsitz befestigbar ist. Dabei wird der Kindersitz zusammen mit dem darin befindlichen Kind mittels eines Beckengurtes und eines Gurtschlosses mit dem Kraftfahrzeugsitz verbunden. Am Gurtschloß ist ein elektrischer bzw. elektronischer Schalter vorgesehen, welcher beim Einrasten der Schloßzunge des Beckengurtes am Gurtschloß die Auslösung des vor dem Kindersitz befindlichen Airbags verändern bzw. verhindern soll.

Bei einer derartigen Verbindung des Kindersitzes mit dem Kraftfahrzeugsitz kann es jedoch vorkommen, daß der Beckengurt nicht ordnungsgemäß am Gurtschloß einrastet bzw. durch ein Defekt am elektrischen Schalter (Sensor) keine Entaktivierung des Airbags erfolgt. Dieser Zustand kann unbemerkt bleiben, da bei dieser Lösung das Signal des Schalters nicht zur Anzeige der ordnungsgemäßen Verbindung des Kindersitzes mit dem Kraftfahrzeugsitz genutzt ist. Dadurch entsteht die Gefahr, daß das im Kindersitz befindliche Kind bei einem darauffolgenden Unfall durch den nicht entaktivierten Airbag verletzt wird.

Weiterhin kann der Kindersitz bei dieser Verbindung nicht allseitig auf dem Fahrzeugsitz festgehalten werden. Insbesondere in Querrichtung des Kraftfahrzeugs kann sich der mittels des Beckengurtes befestigte Kindersitz gegen- über dem Fahrzeugsitz verschieben. Diese Beweglichkeit des Kindersitzes kann die Sicherheit des Kindes z. B. in scharfen Kurven oder bei seitlichen Kollisionen erheblich mindern.

Eine allseitig feste Befestigung des Kindersitzes auf dem Kraftfahrzeugsitz ist zwar aus der Entgegenhaltung US-A-4 743 064 und dem ISOFIX-Bericht vom Mai 1991 bekannt, jedoch sind die darin offenbarten Befestigungsvorrichtungen aufwendig in der Konstruktion bzw. sie beanspruchen viel Raum im Bereich zwischen der Rückenlehne und dem Sitzteil des Kraftfahrzeuges. Auch bei diesen Kindersitzen ist eine Entaktivierung des Airbags bzw. die Überwachung des Zustandes der Verbindung mit dem Kraftfahrzeugsitz nicht vorgesehen, so daß die vorstehend beschriebenen Gefahren für ein mitfahrendes Kind auch bei diesen Kindersitzen bestehen.

Die Aufgabe der vorliegenden Erfindung liegt demnach darin, ein Kraftfahrzeug der genannten Gattung derart weiterzubilden, daß die Sicherheit eines in einem Kindersitz zu befördernden Kindes weiter erhöht und die Befestigung des dazugehörigen Kindersitzes auf dem Kraftfahrzeugsitz vereinfacht wird.

Erfindungsgemäß wird diese Aufgabe dadurch gelöst, daß der Kindersitz mindestens eine fest mit ihm verbundene Raste aufweist, die bei der Befestigung des Kindersitzes am Fahrzeugsitz mit der Befestigungsvorrichtung zusammenwirkt, wobei das Signal des als ein auf die Airbag-Steuerung wirkender Impulsgeber ausgebildeten Sensors für die Auslösung einer Anzeige zur ordnungsgemäßen Verbindung des Kindersitzes mit dem Fahrzeugsitz genutzt ist.

Durch diese Ausbildung ist der Kindersitz auf eine einfache Weise fest mit dem Fahrzeugsitz verbunden, so daß er keine Bewegungen in Fahrzeugquerrichtung ausführen kann. Bei der Befestigung des Kindersitzes auf dem Fahrzeugsitz wird vom Impulsgeber, der auf die entsprechende Raste des Kindersitzes reagiert, ein Signal erzeugt, welches bei Bedarf den im Bereich vor dem Kindersitz befindlichen Airbag entaktiviert bzw. ausschaltet. Eine am Armaturenbrett befindliche Anzeigevorrichtung zeigt dabei den Zustand der Verbindung des Kindersitzes mit dem Fahrzeugsitz optisch oder akustisch an. Der Kindersitz kann bei dieser Ausführung sowohl mit dem Rückenlehnenteil nach vorne in Fahrtrichtung als auch mit dem Rückenlehnenteil nach hinten entgegen der Fahrtrichtung auf dem Fahrzeugsitz positioniert werden.

Zur Vereinfachung der Befestigung des Kindersitzes auf dem Fahrzeugsitz können die Befestigungsvorrichtungen als rastende Befestigungsvorrichtungen ausgebildet werden, die an sich bekannte Mittel zur Verrastung enthalten. Die Befestigungsvorrichtungen können dabei jeweils an beiden Seiten des Sitzkissens des Fahrzeugsitzes oder im Bereich der Kehle zwischen der Rückenlehne und dem Sitzkissen angeordnet und mit der tragenden Struktur des Fahrzeugsitzes, z. B. am unteren Bereich der Rückenlehne des Beifahrersitzes oder mit dem Unterbau, wie z. B. bei den Fahrzeugsitzen im Fond, verbunden werden. Dadurch entsteht eine günstige, dem Sitzkissen etwa parallel verlaufende Befestigungs- bzw. Verrastungsrichtung für den Kindersitz, so daß keine zusätzlichen Kräfte und Momente bei der Beanspruchung der Befestigungsvorrichtungen beim Bremsen oder z. B. im Falle eines Zusammenstoßes auf den Kindersitz übertragen werden.

Besonders einfach können die Befestigungsvorrichtungen mit der tragenden Struktur des Fahrzeugsitzes verbunden werden, wenn diese beiderseits des Fahrzeugsitzes im Bereich der ortsfesten Rückenlehnen-Beschläge angeordnet sind. Die Befestigungsvorrichtungen können dabei auch direkt mit den Rückenlehnen-Beschlägen z. B. mittels einer Schraubverbindung fest verbunden sein.

Nach einer bevorzugten Ausführung können die Befestigungsvorrichtungen in Form von Gurtschlössern für Sicherheitsgurte ausgebildet werden, die mit den Rasten des Kindersitzes zusammenwirken, wobei die Befestigungsvorrichtungen sich durch die Lage und den Einbauort am Fahrzeugsitz von den vorhandenen Sicherheitsgurt-Schlössern unterscheiden.

Als Befestigungsvorrichtungen für den Kindersitz können auch die ohnehin für die Sicherheitsgurte vorhandenen Gurtschlösser dienen, wenn gemäß einer weiteren Ausführungsform der Erfindung diese Gurtschlösser am Fahrzeugsitz derart angeordnet sind, daß eine sichere Befestigung des Kindersitzes auf dem Fahrzeugsitz gewährleistet ist. Dazu müssen lediglich die dafür verwendeten Gurtschlösser in Fahrzeuglängs- und Fahrzeugquerrichtung festgelegt sein.

Durch diese Ausbildungen kann beim gleichen Fahrzeugsitz entweder der Sicherheitsgurt für eine mitfahrende Person benutzt oder auch der Kindersitz zur Beförderung eines Kindes befestigt werden.

Der erfindungsgemäße Kindersitz kann mit dem Rückenlehnenteil nach vorne in Fahrtrichtung auf dem Fahrzeugsitz befestigt werden, wenn an einem dem Rückenlehnenteil abgewandten Ende des Sitzauflagebereiches beiderseits Rasten vorhanden sind, die mit Befestigungsvorrichtungen am Fahrzeugsitz zusammenwirken. Dabei wird der Kindersitz einfach mittels der Rasten, die aus an sich bekannten Mitteln, wie z. B. Steckzungen für Sicherheitsgurte, gebildet und am Sitzauflagebereich mit der tragenden Struktur des Kindersitzes fest verbunden sind, an den Befestigungsvorrichtungen arretiert.

Eine alternative Befestigung des Kindersitzes auf dem Fahrzeugsitz, bei der der Kindersitz mit dem Rückenlehnenteil nach hinten entgegen der Fahrtrichtung positioniert wird, kann dadurch ermöglicht werden, daß auch an einem dem Rückenlehnenteil zugewandten Ende des Sitzauflagebereiches beiderseits Rasten angeordnet sind.

Nach einer weiteren bevorzugten Ausführungsform werden die Rasten am Sitzauflagebereich mit der tragenden Struktur des Kindersitzes, die als Tragrahmen ausgebildet sein kann, fest verbunden. Am Tragrahmen können alle notwendigen Teile des Kindersitzes, wie z. B. Sitzschale, Sitzunterteil, Polsterteile usw., befestigt werden. Dabei kann der Tragrahmen aus einem Stab- oder Rohrprofil bestehen, an dem die Rasten mittels einer Schraubverbindung oder durch Schweißen befestigt sind.

Um den auf dem Fahrzeugsitz befestigten Kindersitz gegen eine Verschwenkung nach oben festzuhalten, weist der Tragrahmen einen fest mit ihm verbundenen Stützbügel auf. Der Stützbügel ist derart gegenüber dem Sitzauflagebereich abgewinkelt, daß er sich bei der Befestigung des Kindersitzes an der Rückenlehne des Fahrzeugsitzes, die sich in einer normalen, zum Sitzen geeigneten Position befindet, abstützen kann. Der Stützbügel kann dabei zur Schonung des Sitzbezuges mit einem Polsterteil versehen werden. Da der Kindersitz sich dadurch einerseits am Sitzkissen und andererseits an der Rückenlehne des Fahrzeugsitzes abstützen kann, wird er allseitig auf dem Fahrzeugsitz festgehalten.

Die Erfindung wird im folgenden anhand der in den Zeichnungen dargestellten Ausführungsbeispiele näher erläutert.

Teilweise schematisch zeigen:
- Fig. 1: eine perspektivische Ansicht eines Fahrzeugsitzes mit einem noch nicht befestigten Kindersitz;
- Fig. 2: eine perspektivische Ansicht des Fahrzeugsitzes nach Fig. 1 mit dem auf dem Sitzkissen befestigten Kindersitz nach Fig. 1;
- Fig. 3: eine Seitenansicht eines Fahrzeugsitzes im Fond des Kraftfahrzeuges;
- Fig. 4: eine in der Zeichenebene gedrehte Draufsicht auf den Fahrzeugsitz nach Fig. 3;
- Fig. 5: eine Draufsicht auf einen Fahrzeugsitz mit beiderseits im Bereich der ortsfesten Rückenlehnen-Beschläge angeordneten Befestigungsvorrichtungen;
- Fig. 6: eine perspektivische Ansicht eines in seine Bestandteile zerlegten Kindersitzes nach Fig. 1.

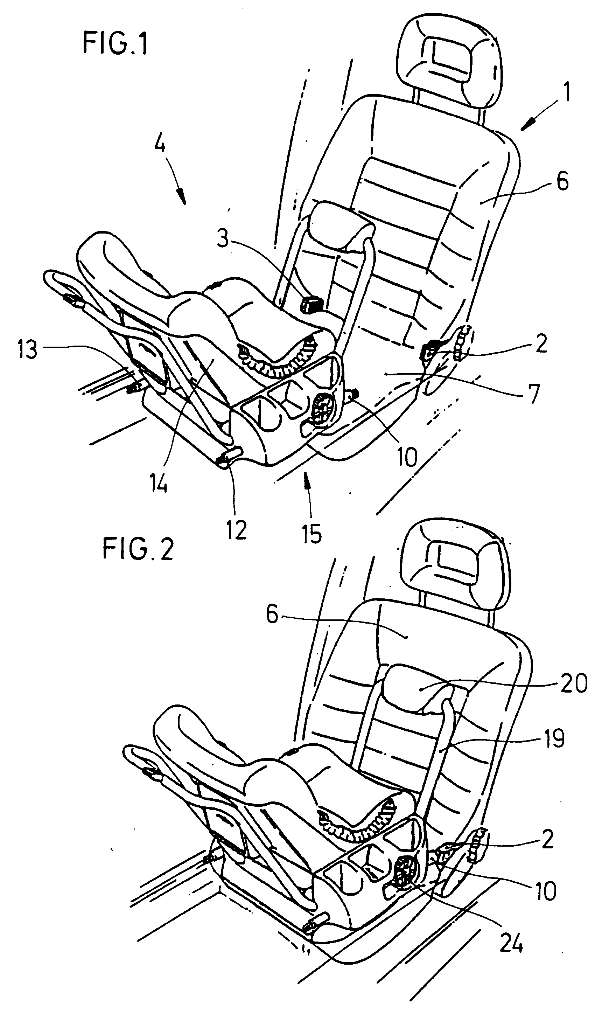

Das in den Figuren nicht näher dargestellte Kraftfahrzeug weist einen Fahrzeugsitz 1 bzw. 18 mit einem darauf befestigbaren Kindersitz 4 auf. Zur Befestigung des Kindersitzes 4 sind, wie in der Fig. 1 gezeigt, am Fahrzeugsitz 1 Befestigungsvorrichtungen 2, 3 vorgesehen, die beiderseits des Sitzkissens 7 im Bereich 8 der ortsfesten Rückenlehnen-Beschläge 21 mit der tragenden Struktur des Fahrzeugsitzes 1 verbunden sind.

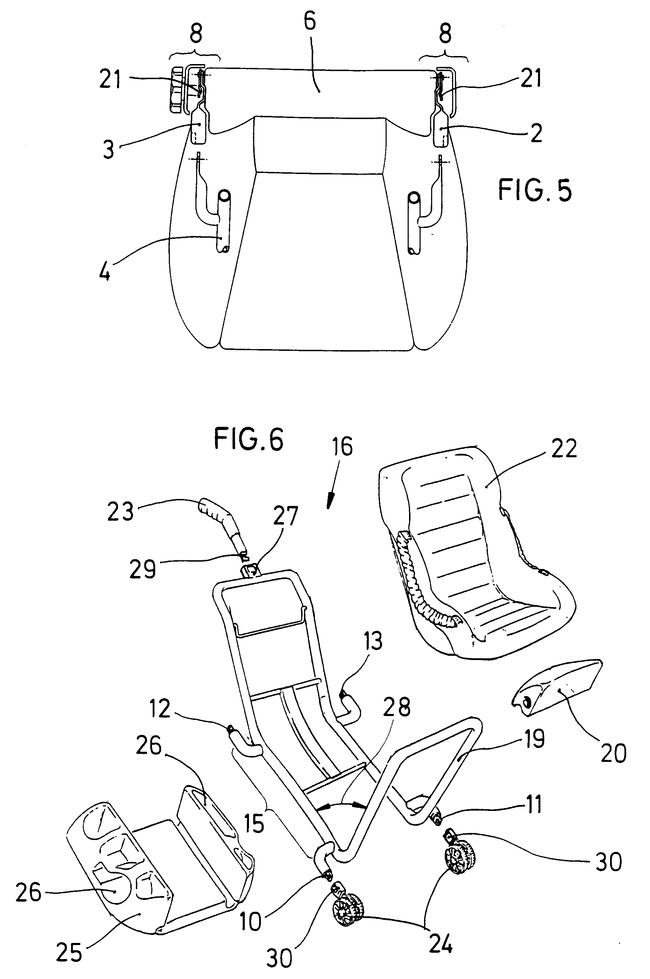

Wie insbesondere in der Fig. 5 gezeigt, sind dabei die Befestigungsvorrichtungen 2, 3, zwischen den jeweiligen Rückenlehnen-Beschlägen 21 und der Rückenlehne 6 angeordnet.

Die Befestigungsvorrichtungen 2, 3 enthalten jeweils einen nicht näher bezeichneten, auf das Befestigen des Kindersitzes 4 reagierenden Sensor zur Entaktivierung eines nicht näher dargestellten Airbags, der sich im Bereich vor dem Rückenlehnenteil 14 des Kindersitzes 4 befindet.

Zur Befestigung des Kindersitzes 4 wird, wie in der Fig. 2 dargestellt, der Kindersitz 4 mit seinen Rasten 10, 11 in die Befestigungsvorrichtungen 2, 3 gesteckt, wobei der Stützbügel 19 zur Anlage an die Rückenlehne 6 kommt.

Bei der Einrastung des Kindersitzes 4 wird von jedem als Impulsgeber ausgebildeten Sensor ein Signal erzeugt, das auf die nicht näher dargestellte Airbag-Steuerung wirkt und somit den vor dem Kindersitz 4 befindlichen Airbag entaktiviert bzw. ausschaltet. Obwohl zur Entaktivierung des Airbags nur ein Signal von einem Sensor notwendig ist, sind zur Erhöhung der Sicherheit beide Befestigungsvorrichtungen 2, 3 mit Sensoren ausgestattet.

Das Signal des Sensors wird auch dazu genutzt, eine fehlerhafte Verbindung (Verrastung) des Kindersitzes 4 mit dem Fahrzeugsitz 1 bzw. 18 in den Befestigungsvorrichtungen 2, 3 am Armaturenbrett anzuzeigen.

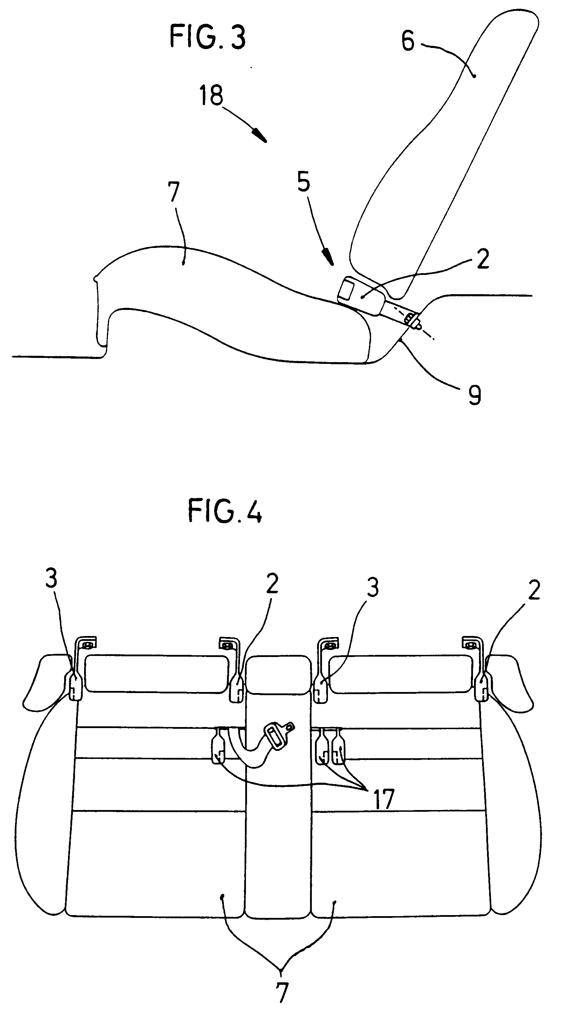

Wie die Fig. 3 und 4 zeigen, kann der Kindersitz auch im Fond des Kraftfahrzeuges auf dem Fahrzeugsitz 18 befestigt werden. Hierzu werden die Befestigungsvorrichtungen 2, 3 im Bereich der Kehle 5 zwischen der Rückenlehne 6 und dem Sitzkissen 7 angeordnet. Zur sicheren Haltung des Kindersitzes sind dabei die Befestigungsvorrichtungen 2, 3 mit dem Unterbau 9 mittels einer Schraubverbindung verbunden. Dadurch können diese bei Bedarf jederzeit entfernt werden.

Durch diese Anordnung der Befestigungsvorrichtungen 2, 3 ist eine Verwechslung mit den im Bereich der Fahrzeugmitte auf dem Sitzkissen 7 befindlichen Sicherheitsgurt-Schlössern 17 ausgeschlossen.

Der auf dem Fahrzeugsitz 1 bzw 18 befestigbare Kindersitz 4 gemäß Fig. 6 besteht im wesentlichen aus einem Tragrahmen 16, an dem die formsteife Sitzschale 22, das Unterteil 25 und das Polsterteil 20 befestigt sind. Die Sitzschale 22 ist mit eigenen, zum Festhalten eines Kindes geeigneten Gurten ausgerüstet. Das Unterteil 25 ist unterhalb der Sitzschale 22 am Tragrahmen 16 befestigt. Am Unterteil 25 sind Taschen 26 zur Aufnahme von verschiedenem Zubehör vorgesehen.

Der Tragrahmen 16 weist am Sitzauflagebereich 15 fest mit ihm verbundene Rasten 10, 11, 12, 13 auf, die bei der Befestigung des Kindersitzes 4 mit den Befestigungsvorrichtungen 2, 3 zusammenwirken. Alle Rasten 10, 11, 12, 13 haben die gleiche Form. Bei Bedarf können jedoch die dem Rückenlehnenteil 14 des Sitzauflagebereich 15 zugewandten Rasten 12, 13 eine andere Form als die Rasten 10, 11 haben. Ein solcher Bedarf besteht z. B dann, wenn die Rasten 12, 13 im Gegensatz zu den Rasten 10, 11 den Airbag nicht entaktivieren sollen.

Der mit einem Polsterteil 20 versehene Stützbügel 19 am Tragrahmen 16 ist gegenüber dem Sitzauflagebereich 15 derart abgewinkelt, daß er bei der Befestigung des Kindersitzes 4 auf dem Fahrzeugsitz 1 bzw. 18 mit der Rückenlehne 6 zur Anlage kommt. Der Winkel 28 zwischen dem Stützbügel 19 und dem Sitzauflagebereich 15 kann im Bereich von 90° bis 135° liegen und beträgt vorzugsweise 105°.

## Patentansprüche

1. Kraftfahrzeug mit mindestens einem Fahrzeugsitz (1), welcher mindestens eine Befestigungsvorrichtung (2, 3) für einen darauf befestigbaren Kindersitz (4) aufweist und mindestens einem Airbag im Bereich dieses Fahrzeugsitzes (1), wobei der Kindersitz (4) eine formsteife Sitzschale (22) mit einer Polsterung und Gurten zum Festschnallen des Kindes aufweist und die Befestigungsvorrichtung (2 bzw. 3) mit einem auf das Befestigen des Kindersitzes (4) reagierenden Sensor zur Entaktivierung des Airbags versehen ist, dadurch gekennzeichnet, daß der Kindersitz (4) mindestens eine fest mit ihm verbundene Raste (10, 11, 12, 13) aufweist, die bei der Befestigung des Kindersitzes (4) am Fahrzeugsitz (1) mit der Befestigungsvorrichtung (2, 3) zusammenwirkt, wobei das Signal des als ein auf die Airbag-Steuerung wirkender Impulsgeber ausgebildeten Sensors für die Auslösung einer Anzeige zur ordnungsgemäßen Verbindung des Kindersitzes (4) mit dem Fahrzeugsitz (1) genutzt ist.

2. Kraftfahrzeug nach Anspruch 1, dadurch gekennzeichnet, daß die Befestigungsvorrichtungen (2, 3) beiderseits des Sitzkissens (7) des Fahrzeugsitzes (1) angeordnet sind.

3. Kraftfahrzeug nach Anspruch 1 oder 2, dadurch gekennzeichnet, daß die Befestigungsvorrichtungen (2, 3) im Bereich der Kehle (5) zwischen der Rückenlehne (6) und dem Sitzkissen (7) angeordnet sind.

4. Kraftfahrzeug nach einem der Ansprüche 1 bis 3, dadurch gekennzeichnet, daß die Befestigungsvorrichtungen (2, 3) beiderseits des Fahrzeugsitzes (1) im Bereich (8) der ortsfesten Rückenlehnen-Beschläge (21) angeordnet sind.

5. Kraftfahrzeug nach einem der Ansprüche 1 bis 4, dadurch gekennzeichnet, daß die Befestigungsvorrichtungen (2, 3) in Form von Gurtschlössern für Sicherheitsgurte ausgebildet sind.

6. Kraftfahrzeug nach einem der Ansprüche 1 bis 5, dadurch gekennzeichnet, daß als Befestigungsvorrichtungen (2, 3) die ohnehin für die Sicherheitsgurte vorhandenen Gurtschlösser dienen.

7. Kraftfahrzeug nach einem der Ansprüche 1 bis 6, dadurch gekennzeichnet, daß die Befestigungsvorrichtungen (2, 3) mit der tragenden Struktur des Fahrzeugsitzes verbunden sind.

8. Kraftfahrzeug nach einem der Ansprüche 1 bis 6, dadurch gekennzeichnet, daß die Befestigungsvorrichtungen (2, 3) mit dem Unterbau (9) des Kraftfahrzeuges verbunden sind.

9. Kraftfahrzeug nach einem der Ansprüche 1 bis 8, dadurch gekennzeichnet, daß am Kindersitz (4) an einem dem Rückenlehnenteil (14) abgewandten Ende des Sitzauflagebereiches (15) beiderseits Rasten (10, 11) angeordnet sind.

10. Kraftfahrzeug nach einem der Ansprüche 1 bis 9, dadurch gekennzeichnet, daß am Kindersitz (4) zusätzlich an einem dem Rückenlehnenteil (14) zugewandten Ende des Sitzauflagebereiches (15) beiderseits Rasten (12, 13) angeordnet sind.

11. Kraftfahrzeug nach Anspruch 9 und 10, dadurch gekennzeichnet, daß die Rasten (10, 11, 12, 13) in Form von Steckzungen für einen Sicherheitsgurt ausgebildet sind.

12. Kraftfahrzeug nach einem der Ansprüche 9 bis 11, dadurch gekennzeichnet, daß die Rasten (10, 11, 12, 13) am Sitzauflagebereich (15) mit der tragenden Struktur des Kindersitzes (4) fest verbunden sind.

13. Kraftfahrzeug nach Anspruch 12, dadurch gekennzeichnet, daß die tragende Struktur als Tragrahmen (16) ausgebildet ist.

14. Kraftfahrzeug nach Anspruch 13, dadurch gekennzeichnet, daß der Tragrahmen (16) einen fest mit ihm verbundenen Stützbügel (19) aufweist, der sich bei Befestigung des Kindersitzes (4) mit dem Fahrzeugsitz (1) an der Rückenlehne (6) des Fahrzeugsitzes (1) abstützt.

## Claims

1. Motor vehicle with at least one vehicle seat (1) which comprises at least one fixing device (2, 3) for a child seat (4) which can be fixed thereto, and at least one air bag in the region of this vehicle seat (1), wherein the child seat (4) comprises a dimensionally stable seat shell (22) with upholstery and straps for fastening the child and the fixing device (2 or 3) is provided with a sensor reacting to fixing of the child seat (4) for deactivation of the air bag, characterised in that the child seat (4) comprises at least one catch (10, 11, 12, 13) which is rigidly connected to it and which, when the child seat (4) is fixed to the vehicle seat (1), cooperates with the fixing device (2, 3), wherein the signal of the sensor designed as a pulse generator acting on the air bag control means is used to trigger an indicator for proper connection of the child seat (4) to the vehicle seat (1).

2. Motor vehicle according to claim 1, characterised in that the fixing devices (2, 3) are arranged on both sides of the seat cushion (7) of the vehicle seat (1).

3. Motor vehicle according to claim 1 or 2, characterised in that the fixing devices (2, 3) are arranged in the region of the groove (5) between the backrest (6) and the seat cushion (7).

4. Motor vehicle according to any of claims 1 to 3, characterised in that the fixing devices (2, 3) are arranged on both sides of the vehicle seat (1) in the region (8) of the stationary backrest fittings (21).

5. Motor vehicle according to any of claims 1 to 4, characterised in that the fixing devices (2, 3) are designed in the form of belt locks for safety belts.

6. Motor vehicle according to any of claims 1 to 5, characterized in that the belt locks which exist anyway for the safety belts serve as fixing devices (2, 3).

7. Motor vehicle according to any of claims 1 to 6, characterized in that the fixing devices (2, 3) are connected to the supporting structure of the vehicle seat.

8. Motor vehicle according to any of claims 1 to 6, characterized in that the fixing devices (2, 3) are connected to the chassis (9) of the motor vehicle.

9. Motor vehicle according to any of claims 1 to 8, characterized in that on the child seat (4), at one end of the seat mounting region (15) facing away from the backrest portion (14), on both sides are arranged catches (10, 11).

10. Motor vehicle according to any of claims 1 to 9, characterized in that on the child seat (4), in addition at one end of the seat mounting region (15) facing towards the backrest portion (14), on both sides are arranged catches (12, 13).

11. Motor vehicle according to claims 9 and 10, characterized in that the catches (10, 11, 12, 13) are designed in the form of insertion tongues for a safety belt.

12. Motor vehicle according to any of claims 9 to 11, characterized in that the catches (10, 11, 12, 13) on the seat mounting region (15) are rigidly connected to the supporting structure of the child seat (4).

13. Motor vehicle according to claim 12, characterized in that the supporting structure is designed as a supporting frame (16).

14. Motor vehicle according to claim 13, characterized in that the supporting frame (16) comprises a U-shaped support (19) which is rigidly connected thereto and which, when the child seat (4) is fixed to the vehicle seat (1), is supported on the backrest (6) of the vehicle seat (1).

## Revendications

1. Véhicule automobile comprenant au moins un siège de véhicule (1) qui présente au moins un dispositif de fixation (2, 3) pour un siège pour enfant (4) susceptible d'y être fixé et au moins un coussin gonflable de sécurité dans la zone de ce siège de véhicule (1), le siège pour enfant (4) présentant une coque de siège rigide (22) avec un rembourrage et des sangles pour l'immobilisation de l'enfant et le dispositif de fixation (2 ou 3) étant muni d'un détecteur réagissant à la fixation du siège pour enfant (4), pour la désactivation du coussin gonflable, caractérisé par le fait que le siège pour enfant (4) présente au moins un moyen d'encliquetage (10, 11, 12, 13) qui y est relié rigidement et qui, lors de la fixation du siège pour enfant (4) au siège de véhicule (1), coopère avec le dispositif de fixation (2, 3), le signal du détecteur réalisé sous forme de transmetteur d'impulsion agissant sur la commande du coussin gonflable étant utilisé pour le déclenchement d'une signalisation de la liaison correcte du siège pour enfant (4) avec le siège de véhicule (1).

2. Véhicule automobile suivant la revendication 1, caractérisé par le fait que les dispositifs de fixation (2, 3) sont disposés de part et d'autre du coussin d'assise (7) du siège de véhicule (1).

3. Véhicule automobile suivant la revendication 1 ou 2, caractérisé par le fait que les dispositifs de fixation (2, 3) sont disposés dans la zone du creux (5) entre le dossier (6) et le coussin d'assise (7).

4. Véhicule automobile suivant l'une des revendications 1 à 3, caractérisé par le fait que les dispositifs de fixation (2, 3) sont disposés de part et d'autre du siège de véhicule (1) dans la zone (8) des ferrures fixes (21) du dossier.

5. Véhicule automobile suivant l'une des revendications 1 à 4, caractérisé par le fait que les dispositifs de fixation (2, 3) sont réalisés sous la forme de serrures (boucles) de ceintures de sécurité.

6. Véhicule automobile suivant l'une des revendications 1 à 5, caractérisé par le fait que les dispositifs de fixation (2, 3) sont constitués par les serrures (boucles) prévues de toutes manières pour les ceintures de sécurité.

7. Véhicule automobile suivant l'une des revendications 1 à 6, caractérisé par le fait que les dispositifs de fixation (2, 3) sont reliés à la structure portante du siège pour enfant.

8. Véhicule automobile suivant l'une des revendications 1 à 6, caractérisé par le fait que les dispositifs de fixation (2, 3) sont reliés au soubassement (9) du véhicule automobile.

9. Véhicule automobile suivant l'une des revendications 1 à 8, caractérisé par le fait que des moyens d'encliquetage (10, 11) sont disposés sur le siège pour enfant (4) de part et d'autre à l'extrémité de la zone d'appui de siège (15) éloignée du dossier (14).

10. Véhicule automobile suivant l'une des revendications 1 à 9, caractérisé par le fait que des moyens d'encliquetage (12, 13) sont prévus en plus sur le siège pour enfant (4) de part et d'autre à l'extrémité de la surface d'appui de siège (15) tournée vers le dossier (14).

11. Véhicule automobile suivant les revendication 9 et 10, caractérisé par le fait que les moyens d'encliquetage (10, 11, 12, 13) sont réalisés sous la forme de languettes-pênes pour une ceinture de sécurité.

12. Véhicule automobile suivant l'une des revendications 9 à 11, caractérisé par le fait que les moyens d'encliquetage (10, 11, 12, 13) sont reliés rigidement, dans la zone d'appui de siège (15), à la structure portante du siège pour enfant (4).

13. Véhicule automobile suivant la revendication 12, caractérisé par le fait que la structure portante est réalisée sous forme de cadre porteur (16).

14. Véhicule automobile suivant la revendication 13, caractérisé par le fait que le cadre porteur (16) présente un arceau d'appui (19) qui s'y trouve relié rigidement et qui s'appuie, lors de la fixation du siège pour enfant (4) au siège de véhicule (1), contre le dossier (6) du siège de véhicule (1).
